# EUROPÄISCHE PATENTANMELDUNG

(11) **EP 2 846 042 A1**
(43) Veröffentlichungstag der Anmeldung: **11.03.2015**
(21) Anmeldenummer: 13183287.5
(22) Anmeldetag: 06.09.2013
(51) Int. Cl.: F03G 7/08, F03G 3/08

(54) **Schwungradenergiespeicher mit Notfalllagerelement**

(71) Anmelder: Enrichment Technology Company Ltd., 52428 Jülich (DE)
(72) Erfinder: Otremba, Frank, 52223 Stolberg (DE)
(74) Vertreter: Jostarndt, Hans-Dieter

(57) **Zusammenfassung**

Die Erfindung betrifft einen Schwungradenergiespeicher (1) mit einem Notfalllagerelement (5) und ein Verfahren zum Betreiben eines solchen Schwungradenergiespeichers (1), der einen zylinderförmigen Rotor (2) zur Speicherung von Rotationsenergie und ein den Rotor (2) ummantelndes mit der Gehäuseumgebung (4) verbundenes Gehäuse (3) mit einem Gehäusefuß (31) umfasst, wobei Betriebslager (32) im Bereich des oberen und unteren Endes (21, 22) des Rotors (2) zur geeigneten Lagerung des Rotors (2) für einen Normalbetrieb (NB) um eine Rotationsachse (R) angeordnet sind und im Bereich des unteren Endes (22) des Rotors (2) ein rotationssymmetrisches Notfalllagerelement (5) innerhalb eines offenen unteren Bereichs (22B) des zylinderförmigen Rotors (2) angeordnet ist, das über einen aus Richtung des Gehäusefußes (31) in den Rotor hineinragenden Gehäuseelement (33) mit dem Gehäusefuß (31) verbunden ist, und dessen äußere Form auf den inneren Zylinderdurchmesser (DR1) des zylinderförmigen Rotors (2) so angepasst ist, dass ein Spaltmaß (SM) zwischen einer Innenseite (2i) des zylinderförmigen Rotors (2) und einer Außenseite (5a) des Notfalllagerelements (5) existiert, dass darauf angepasst ist, dass sich die Außenseite (5a) des Notfalllagerelements (5) und die Innenseite (2i) des Rotors (2) im Normalbetrieb (NB) nicht berühren und im Notfallbetrieb (NF) eine Gleitlagerung des Rotors (2) auf dem Notfalllagerelement (5) ermöglicht wird und dass eine Verkippung des Rotors (2) gegenüber dem Gehäuse (3) höchstens zu einem streifenden Ablaufen des Rotors (2) an einer Innenseite (3i) des Gehäuses (3) führt.

## Beschreibung

### Gebiet der Erfindung

Die Erfindung bezieht sich auf einen Schwungradenergiespeicher mit einem Notfalllagerelement und auf ein Verfahren zum Betreiben eines solchen Schwungradenergiespeichers.

### Hintergrund der Erfindung

Schwungräder werden beispielsweise für die Energiespeicherung in Form von Rotationsenergie verwendet. Über geeignete Einkopplungsmittel kann elektrische Energie in diesen Energiespeichern in Form von Rotationsenergie gespeichert und bei Bedarf wieder zurück in elektrische Energie umgewandelt und an einen Verbraucher abgegeben werden. Derartige Schwungrad-Energiespeicher umfassen einen Rotationskörper (Rotor), der entsprechend seiner Drehzahl und Masse eine bestimmte Menge an Energie speichert. Die Speicherkapaziät eines solchen Energiespeichers ist durch seine maximale Drehzahl begrenzt. Der Rotor ist dabei meistens über geeignete Verbindungsmittel mit einer Lagerwelle verbunden, die den Rotor hält. Die Lagerwelle ist in entsprechenden Lagern drehbar gelagert. Die Lager- und Antriebselemente befinden sich dabei vorzugsweise auf der Rotationsachse des Rotors. Die Verbindungsmittel haben dabei die Aufgabe, eine Verbindung und Fixierung zwischen dem äußeren Schwungradkörper (Zylinder) mit der Laufachse (Welle) herzustellen sowie für die Übertragung des Torsionsmoments von der Antriebswelle auf den Schwungradkörper und umgekehrt zu sorgen. Aus der Formel zur Berechnung des Energiegehalts eines Rotors ergibt sich, dass der Rotor mit hohem Energiegehalt vorrangig auf hohe Drehzahl ausgelegt werden sollte. Um solche hohen Drehzahlen erreichen zu können, wird der Rotor vorzugsweise im Vakuum betrieben. Dazu ist der Rotor von einem luftdichten Gehäuse ummantelt. Die Lagerung des schnelldrehenden Rotors kann beispielseise berührungslos über entsprechende axiale und radiale Magnetlager erfolgen, so dass der Rotor im Betrieb berührungslos rotiert.

Bei einem Versagen der Lager und/oder der Naben und/oder eines anderen wesentlichen Teils des schnelldrehenden Rotors verbleibt der rotierende Rotor nicht mehr in seiner Sollposition, so dass der Rotor in das ummantelnde Gehäuse einschlagen könnte. Hierbei muss die Umwelt vor der so freiwerdenden Rotationsenergie geschützt werden. In einem solchen Schadensfall erzeugt der Rotor des Energiespeichers extreme Belastungen auf das Gehäuse und insbesondere auf die Verschraubungen des Gehäuses mit dem Boden oder anderen Befestigungen des Gehäuses. Zum Schutz der Umgebung des Energiespeichers muss das Gehäuse entspechend robust ausgelegt und an einem Fundament entsprechend sicher befestigt werden, damit verhindert wird, dass der Rotor im maximalen Schadensfall das Gehäuse durchschlägt oder es aus seiner Verankerung reißt. Dadurch würde das Gehäuse für einen ortsvariablen Einsatz von Schwungradspeicher zu schwer und durch den erhöhten Materialeinsatz auch entsprechend teuer werden.

Um den Schadensfall beim Versagen der Lager des schnelldrehenden Rotors in seiner Wirkung zu verringern, werden zurzeit Kugelnotlauflager zusätzlich zu den für den Normalbetrieb vorgesehenen Lagern für den Rotor verwendet. Diese Kugellagerung ist aber nur auf Stahlwellen des Energiespeichers möglich und muss sowohl am unteren Ende als auch am oberen Ende des Rotors erfolgen, um einen Einschlag des Rotors in die Gehäusewand um den Rotor herum nach Möglichkeit zu vermeiden. Gerade die Notlagerung am obere Ende des Rotor führt im Schadensfall zu Problemen mit der Eigenform des Gehäuses und damit zu extremen Belastungen der Gehäusebefestigungen, da über die Länge des Rotors und die am oberen Ende auf das obere Notlauflager wirkende Kaft eine sehr starke Hebelwirkung auf die untere Rotorbefestigung und damit auch auf die untere Gehäusebefestigung wirkt. Darüber hinaus kann eine dadurch verursachte elastische Verformung des Rotors zu einem Anlaufen des Rotors an Magnetlager oder Magnetstator und damit zu einer nachfolgenden Beschädigung oder Zerstörung dieser Komponenten führen. Außerdem können solche Kugelnotlauflager den schnelldrehenden Rotor beim Versagen der Nabe nicht abfangen, so dass selbst bei Vorhandensein von Kugelnotlauflager der Rotor bei einem Versagen der Nabe umgelenkt in das ummantelnde Gehäuse einschlägt. Es wäre daher wünschenswert, einen Rotor mit einer Lagerung bereitzustellen, der die voranstehend aufgefürten Nachteile zuverlässig vermeidet und zudem kostengünstig zu fertigen ist.

### Zusammenfassung der Erfindung

Es ist eine Aufgabe der vorliegenden Erfindung, eine Notfalllagerung für einen Rotor eines Schwungradenergiespeichers mit hoher Speicherkapazität bereitzustellen, die geeignet ist, bei einem Versagen sowohl der Betriebslager als auch der Nabe(n) die Rotationsenergie des Rotors so aufzufangen, dass die Belastungen des Rotorgehäuses deutlich vermindert werden.

Diese Aufgabe wird gelöst durch einen Schwungradenergiespeicher umfassend einen zylinderförmigen Rotor zur Speicherung von Rotationsenergie und ein den Rotor ummantelndes mit der Gehäuseumgebung verbundenes Gehäuse mit einem Gehäusefuß, wobei Betriebslager im Bereich des oberen und unteren Endes des Rotors zur geeigneten Lagerung des Rotors für einen Normalbetrieb um eine Rotationsachse angeordnet sind und im Berreich des unteren Endes des Rotors ein Notfalllagerelement innerhalb eines offenen unteren Bereichs des zylinderförmigen Rotors angeordnet ist, das über einen aus Richtung des Gehäusefußes in den Rotor hineinragenden Gehäuseelement mit dem Gehäusefuß verbunden ist, und dessen äußere Form auf den inneren Zylinderdurchmesser des zylinderförmigen Rotors so angepasst ist, dass ein Spaltmaß zwischen einer Innenseite des zylinderförmigen Rotors und einer Außenseite des Notfalllagerelements existiert, dass darauf angepasst ist, dass sich die Außenseite des Notfalllagerelements und die Innenseite des Rotors im Normalbetrieb nicht berühren und im Notfallbetrieb eine Gleitlagerung des Rotors auf dem Notfalllagerelement ermöglicht wird und dass eine Verkippung des Rotors gegenüber dem Gehäuse höchstens zu einem streifenden Ablaufen des Rotors an einer Innenseite des Gehäuses führt. Dieser streifende Ablauf führt dazu, dass zumindest in einem ersten Zeitintervall die Vernichtung einer ersten Menge an Rotationsenergie schonend für das Rotorgehäuse erfolgt, so dass die verbleibende Energie des Rotors das Rotorgehäuse nur noch deutlich weniger belasten kann.

Um den Energiegehalt eines Schwungradenergiespeichers zu maximieren, wird dieser bei geringem Eigengewicht auf maximale Drehzahl gebracht, da für den maximalen Energiegehalt die Drehzahl quadratisch, dagegen das Gewicht nur linear eingeht. Die Rotoren von Schwungsradenergiespeichern mit hoher Speicherkapazität rotierend daher bei voll geladenem Zustand mit hohen Drehzahlen. Der Rotationskörper des Schwungradenergiespeichers ist dabei über Naben mit den Lager- und Antriebselementen des Schwungrad-Energiespeichers verbunden. Da der Schwungradenergiespeicher im Normalbetrieb für die Aufnahme aus einem angeschlossenen Stromnetz beziehungsweise für die Abgabe von Energie in ein angeschlossenes Stromnetz vorgesehen ist, umfasst der Normalbetrieb Betriebszustände, in denen der Rotor zwischen einer maximalen Drehzahl und geringeren Drehzahlen abhängig vom Energiespeicherzustand betrieben wird. Die Rotoren solcher Schwungradenergiespeicher können je nach Ladezustand mit Drehzahlen zum Beispiel von 50.000 Umdrehungen pro Minute rotieren. Ein typischer Drehzahlbereich liegt zwischen 15.000 Umdrehungen pro Minute und der maximalen Drehzahl, bei der der Schwungradenergiespeicher voll geladen ist.

Der Rotor bezeichnet die Gesamtheit der Teile, die zur Energiespeicherung in einem Schwungrad-Energiespeicher in Rotation versetzt werden. Bei der vorliegenden Erfindung umfasst der zylinderförmige Rotor einen Rotationskörper mit zylindrischer Form. Der Rotationskörper ist dabei die Komponente, die hauptsächlich die Energie in Form von Bewegungsenergie speichert. Die restlichen Komponenten verbinden den Rotationskörper mit einem Antrieb bzw. mit einer Lagerung für den Rotor, damit dieser im Normalbertrieb möglichst verlustfrei rotieren kann (= geeignete Lagerung des Rotors). In der vorliegenden Erfindung ist der Rotationskörper beispielsweise ein an beiden Seiten (Enden) offener und im Wesentlichen hohler Zylinder mit einer Zylinderwand mit einer bestimmten Wandstärke. Der Zylinder besitzt einen äußeren Durchmesser, der die Summe aus dem inneren Durchmessers und der doppelten Wandstärke des Zylinders als Rotationskörper ist. Dabei wird das eine Ende als oberes Ende des Rotors und das andere Ende als unteres Ende des Rotors bezeichnet. Damit dieser Zylinder in einer Lagerung gehalten werden kann, ist er beispielsweise über mindestens zwei Naben mit entsprechenden Zapfen mit jeweiligen Betriebslagern (erstes Betriebslager für erste Nabe und zweites Betriebslager für zweite Nabe) verbunden. Die Naben können im Rotationskörper in jeder beliebigen geeigneten Postion angeordnet sein, sofern der Zapfen eine Form besitzt, die es erlaubt, den Zapfen in einem Lager für den Rotor zu lagern. Die Betriebslager können dabei jeweils ein oder mehrere Radial- und/oder Vertikallager umfassen, die in einer geeigneten Entfernung (= im Bereich) zu den Naben beziehungsweise den Zapfen angeordnet sind, die eine geeignete Lagerung des Rotors für den Normalbetrieb ermöglichen. Der Fachmann ist in der Lage, im Rahmen der vorliegenden Erfindung geeignete Betriebslager in den geeigneten Positionen zu den Naben und/oder Zapfen zu wählen und anzuordnen. Die Rotoren, Naben und Zapfen können je nach Anwendung aus den dafür geeigneten Materialien gefertigt werden. Beispielsweise können der Rotationskörper und die Naben aus CFK-Verbundwerkstoffen und die Zapfen aus Metall gefertigt werden.

Bei einer Drehzahl von 50.000 Umdrehungen pro Minute kann ein Schwungradenergiespeicher mit einem entsprechend ausgeführten Rotor zum Beispiel eine Leistung von 5 kWh abgeben. Wird diese Leistung aufgrund eines technischen Defekts in kurzer Zeit abgegeben, könnte dies zu einer großen Gefährdung der Umgebung um einen solchen Schwungradenergiespeicher führen. Daher ummantelt das Gehäuse (Rotorgehäuse) den Rotor vollständig, um zu verhindern, dass in einem Störfall die Rotationsenergie des Rotors als mechanische Energie unkontrolliert freigesetzt wird. Diese Gefahr einer ungewollten Energiefreisetzung besteht beispielsweise bei einem Versagen zumindest einer der Naben und/oder Zapfen oder eines der Betriebslager, wodurch sich der Rotor im rotierenden Zustand aus seiner Sollposition löst und im Gehäuse eine unkontrollierte Position einnehmen oder eine unkontrollierte dynamische Bewegung durchführen könnte. Diese ungewollten Zustände werden in der vorliegenden Erfindung als Notfallbetrieb bezeichnet. Ohne die erfindungsgemäßen Notfalllagerelemente würde der Rotor im Notfallbetrieb von innen unkontrolliert in das Gehäuse einschlagen, was als sogenannter "Crash" bezeichnet wird. Daher müsste das Gehäuse ohne die erfindungsgemäßen Notfalllagerelemente unter Einsatz hochbelastbarer Materialien mit großer Wandstärke äußerst robust gefertigt werden, um einem solchen Einschlag standzuhalten. Selbst wenn das Gehäuse der Wucht des Einschlags ("Crash") standhalten würde, könnte die Wucht zu einem Abreißen des Gehäuses aus seiner Verankerung mit der Umgebung führen. Somit müsste das Gehäuse aufwendig und robust in dem Erdboden verankert werden. Ein daraus resultierendes Eigengewicht des Gehäuses und seine Verankerung im Erdboden würden einen mobilen Einsatz des Schwungradenergiespeichers verhindern oder zumindest unzumutbar erschweren.

Im Gegensatz dazu stellt der erfindungsgemäße Schwungradenergiespeicher eine Notfalllagerung für einen Notfallbetrieb bereit, mit der bei einem Versagen der Betriebslager oder der Nabe die Rotationsenergie des Rotors über einen längeren Abbremszeitraum aufgefangen wird, wodurch die Belastungen des ummantelnden Gehäuses deutlich vermindert werden. Hierbei wird ein unkontrollierter Einschlag des Rotors in das Gehäuse vermieden. Stattdessen wird die Rotationsenergie durch eine Gleitlagerung des Rotors auf dem Notfalllagerelement über einen längeren Zeitraum mittels Reibung über das Notfalllagerelement abgeführt. Je nach Wahl des Materials des Notfallalgerelements kann über den Reibungskoeffizienten des Materials zum Rotormaterial (Material des Rotationskörpers) und der geometrischen Gestaltung des Notfalllagerelements der Zeitraum für die Abführung der Rotationsenergie (Abbremsen des Rotors bis zu seinem Stillstand) geeignet lang ausgestaltet werden, so dass die pro Zeiteinheit auf das Gehäuse und dessen Verankerung wirkenden Kräfte ausreichend begrenzt werden, so dass auch ein Gehäuse mit geringerer Wandstärke und eine weniger robuste Verankerung des Gehäuses im Notfallbetrieb nicht oder zumindest deutlich weniger beschädigt wird. Das Notfalllagerelement ist dabei vorzugsweise rotationssymmetrisch, um unabhängig von der Position des Rotors die Energie mittels Gleitlagerung aufnehmen zu können. Um überhaupt Energie mittels Gleitlagerung im Sinne der Erfindung aufnehmen zu können, muss das Notfalllagerelement aber nicht rotationssymmetrisch sein, sondern kann eine andere geeignete Form aufweisen. Je nach Position des Rotors nach Versagen von Naben und/oder Betriebslagern läuft der Rotor durch das entsprechend ausgestaltete Notfalllagerelement zumindest zunächst weitgehend kontrolliert an der Innenseite des Gehäuses ab, anstatt in einem sogenannten "Crash" unkontrolliert in das Gehäuse einzuschlagen, wie es im Stand der Technik der Fall ist. Sollte der Rotor beim Ablaufen beschädigt werden, so sorgt das Notfalllagerelement zumindest für den Teil des Rotors, der sie weiterhin berührt, für eine kontrollierte Energieabfuhr. Das wird im erfindungsgemäßen Schwungradenergiespeicher dadurch erreicht, dass das Notfalllagerelement die mögliche Verkippung des Rotors aufgrund eines oder mehrerer versagender Betriebslager und/oder Naben auf einen maximalen Verkippungswinkel begrenzt wird, der klein genug ist, dass der Rotor nicht von innen in das Gehäuse einschlagen kann. Die maximal mögliche Verkippung wird so dimensioniert, dass der Rotor lediglich mit seinem oberen Ende (das Ende, das dem Ende gegenüberliegt, in dessen Bereich der Rotor eine Gleitreibung am Notfalllagerelement durchführt) die Innenseite des Gehäuses berühren kann. Durch diese Berührung schlägt der Rotor nicht in das Gehäuse ein, sondern läuft auf der Innenseite des Gehäuses lediglich entlang (ablaufen), was die freiwerdende Energie mittels Reibung über die Gehäusewand abführt. Außerdem wird der Rotor in dieser verkippten Lage so stabilisiert, dass er ohne weitere gravierende Schäden zu verursachen solange abgebremst wird, bis er die meiste Energie verloren hat und das Gehäuse anschließend gefahrlos zur nachfolgenden Reparatur des Schwungradenergiespeichers geöffnet werden kann. Als Verkippungswinkel wird hier der Winkel zwischen der vorgesehenen Lage der Rotationsachse des Rotors im Normalbetrieb und der Zylinderachse des Rotors im Notfallbetrieb bezeichnet. Hierbei kann im Notfallbetrieb die Zylinderachse des Rotors durch das Ablaufen des Rotors an der Innenseite des Gehäuses und/oder durch die Reibung des Rotors am Notfalllagerelement um die Lage der Rotationsachse im Normalbetrieb herum zirkulieren. Mit der erfindungsgemäßen Notfalllagerung kann neben einem ausgefallenen Betriebslager auch ein Versagen der Nabe(n) oder Zapfen schonend abgefangen werden.

In einer bevorzugten Ausführungsform ist der Schwungradenergiespeicher so ausgestaltet, dass der Rotor im Normalbetrieb eine vertikale Rotationsachse besitzt. Damit lässt sich die Lagerung des Rotors im Normalbetrieb am einfachsten realisieren.

Um die voranstehende Wirkung erzielen zu können, ist das Notfalllagerelement innerhalb eines offenen unteren Bereichs des zylinderförmigen Rotors angeordnet. Der Rotor muss dazu einen zumindest am unteren Ende offenen Bereich umfassen, der zumindest die Bauhöhe des Notfalllagerelements besitzt. Somit wird der zylinderförmige Rotor durch das Notfalllagerelement in seiner Rotationsbewegung geführt. Das Spaltmaß zwischen einer Innenseite des zylinderförmigen Rotors und einer Außenseite des Notfalllagerelements ist im Normalbetrieb umlaufend um das Notfalllagerelement und besitzt eine minimale Größe, damit der Rotor im Normalbetrieb nicht gestört (gebremst) wird. Diese minimale Größe des Spaltmaßes bestimmt sich aus der Sollposition des Rotors im Normalbetrieb und die im Normalbetrieb eventuell auftretenden Positionsschwankungen um diese Sollposition herum. Der Fachmann ist für einen gegebenen Rotor in einem Schwungradenergiespeicher in der Lage, das mindestens notwendige Spaltmaß festzulegen, so dass die Rotation des Rotors im Normalbetrieb durch die Existenz des Notfalllagerelements innerhalb des offenen unteren Bereichs des Rotors nicht gestört wird. Auf der anderen Seite muss die Form des Notfalllagerelements, beispielsweise die Bauhöhe des Notfalllagerelements in Kombination mit dem für den störungsfreien Normalbetrieb benötigten Spaltmaß, die Verkippung des Rotors auf akzeptable Verkippungswinkel begrenzen. Akzeptabel sind dabei alle Verkippungswinkel, die entweder eine Berührung der Innenseite des Gehäuses durch den Rotor vermeiden oder lediglich zu einem Ablaufen des Rotors an der Gehäusewand führen (maximaler Verkippungswinkel).

In einer Ausführungsform ist das Notfalllagerelement in seiner Ausdehnung parallel zur Rotationsachse des Rotors durch eine untere und eine obere Kante begrenzt ist, wobei die Entfernung zwischen unterer und oberer Kante bei einem bestimmten Spaltmaß so groß gewählt ist, dass der Rotor, der mit der Innenseite an einer ersten Position der unteren Kante und an einer gegenüberliegenden zweiten Position der entsprechend gegenüberliegenden oberen Kante des Notfalllagerelements berührt, einen maximalen Verkippungswinkel gegenüber der für den Normalbertrieb vorgesehenen Rotationsachse besitzt, der zumindest klein genug ist, damit der Rotor in einem oberen Bereich seiner Außenseite lediglich streifend an einer Inneneits des Gehäuses ablaufen kann. Je höher die Bauhöhe des Notfalllagerelements ausgestaltet ist, desto größer kann das Spaltmaß gewählt werden, um durch die geometrischen Verhältnisse einen gleichen maximalen Verkippungswinkel zuzulassen. Als Bauhöhe wird hier die Ausdehnung parallel zur Rotationsachse des Rotors bezeichnet. Hierbei ist der größtmögliche Verkippungswinkel des Rotors erreicht, wenn die Innenseite des Rotors mit einem Punkt auf der unteren Kante des Notfalllagerelements und mit einem anderen Punkt gegenüberliegend auf der oberen Kante des Notfalllagerelements anliegt. Die Rotorinnenseite bezeichnet dabei die Seite, die der Zylinderachse zugewandt ist. Entsprechend ist die Außenseite des Rotors die Seite des Rotors, die von der Zylinderachse des Rotors abgewandt ist. In einer bevorzugten Ausführungsform sind dabei die Entfernung und/oder das Spaltmaß so gewählt sind, dass der maximale Verkippungswinkel so klein ist, dass der Rotor auch im Notfallbetrieb mit seiner Außenseite die Innenseite des Gehäuses im oberen Bereich nicht berührt. Durch die Vermeidung einer Berührung der Innerseite des Gehäuses im oberen Bereich durch den Rotor wird die Belastung auf das Gehäuse weiter verringert. Der obere Bereich des Gehäuses bezeichnet dabei den Bereich des Gehäuses, der den oberen Bereich des Rotors umschließt. Als oberer Bereich des Rotors wird der Bereich bezeichnet, mit dem der Rotor im Notfallbetrieb im verkippten Zustand die Innenseite des Gehäuses berühren könnte.

Um die abbremsende Bewegung des Rotors nicht zusätzlich zu stören, ist das Notfalllagerelement auf der der Innenseite des Rotors zugewandten Seite des Notfalllagerelements beispielsweise rotationssymmetrisch ausgeführt. Somit kann der Rotor im Notfallbetrieb entlang des Notfalllagerelements auf einer Kreisbahn anliegend auf dem Notfalllagerelement reibend, ablaufen. Damit das Notfalllagerelement wie voranstehend beschrieben, im unteren offenen Bereich des Rotors gehaltert werden kann, umfasst das Gehäuse ein in den Rotor hineinragendes Gehäuseelement, an dem das Notfalllagerelement geeignet befestigt ist. Dieses Gehäuseelement kann vom Fachmann im Rahmen der vorliegenden Erfindung geeignet ausgestaltet worden sein. Beispielsweise könnte das Gehäuseelement als massives Bauteil ausgeformt sein, das mit dem Gehäusefuß verschweißt oder verschraubt ist. In einer Ausführungsform ist das in den Rotor hineinragende Gehäuseelement zylinderförmig ausgestaltet. Vorzugsweise ist das Gehäuseelement mit dem Gehäusefuß einteilig verbunden. Durch die Befestigung des Notfalllagerelements über das Gehäuseelement am Gehäusefuß, werden die Belastungen im Notfallbetrieb über das Notfalllagerelement direkt in den Gehäusefuß abgeführt und somit unschädlich in die Gehäuseumgebung abgeleitet. Als Gehäuseumgebung wird alles bezeichnet, was nicht der Ummantelung des Rotors dient.

Als Material für das Notfalllagerelement kann beispielsweise ein abriebarmes Material mit geringem Reibungskoeffizienten verwendet werden. Das Material muss zumindest dafür geeignet sein, zumindest ein einmaliges Abbremsen des Rotors zu ermöglichen. Gegenüber Kugellagern hat das Notfalllagerelement als massives Gleitlager ohne bewegliche Teile den Vorteil, ausreichend robust gegenüber den auftretenden Kräften zu sein und damit auch bei einem Versagen der Nabe ein kontrolliertes Abbremsen möglich zu machen. Dies wäre aufgrund der freiwerdenden Energie bei weitgehend voll geladenen Schwungradenergiespeichern mit Kugellagern als Notfalllagerelemente nicht mehr möglicht. Die mechanische Robustheit des erfindungsgemäßen Notfalllagerelements ermöglicht es sogar, am oberen Ende des Rotors auf ein solches Notfalllagerelement zu verzichten und dennoch ein kontrolliertes Abbremsen des Rotors zu erreichen. So können Hebelkräfte durch das obere Ende des Rotors auf den oberen Teil das Gehäuse vermieden werden, die sich besonders schädlich auf die Verankerung des Gehäuses an der Gehäuseumgebung ausgewirkt hätten. Aufgrund des erfindungsgemäßen Notfalllagerelements können außerdem Rotoren verwendet werden, die keine durchgehende Welle aus Metall besitzen, und dennoch dieses günstige Notfallverhalten zeigen.

Auf diese Weise kann das Gehäuse mit geringerer Wandstärke und/oder aus weniger robusten Materialien und damit leichter hergestellt werden. Außerdem werden die Verankerungen des Gehäuses in der Gehäuseumgebung bedeutend weniger belastet, so dass einfachere und reversibel ausgestaltete Verankerungen des Gehäuses verwendet werden können. Diese leichtere Bauweise des Gehäuses bei gleichbleibenden Absicherung der Gehäuseumgebung gegenüber freiwerdender Rotationsenergie im Notfallbetrieb erlaubt eine einfachere, resourcenschonende und kostengünstigere Fertigung des Schwungradenergiespeichers und ermöglicht des Weiteren den Einsatz solcher Schwungradenergiespeicher als mobile Energiespeichereinheiten. Die Verankerung des Gehäuses an der Gehäuseumgebung kann auf jede geeignete Weise ausgeführt sein, beispielsweise indem das Gehäuse über Verstrebungen in einem Rahmen gehaltert ist und/oder indem ein unterer Teil des Gehäuses, beispielsweise der Gehäusefuß mit dem Boden unterhalb des Gehäuses über geeignete Verbindungsmittel verbunden ist.

Damit die Rotoren von Schwungradenergiespeichern möglichst verlustarm rotieren und damit die Energie möglichst verlustarm speichern können, wird im Gehäuse während des Betriebs des Schwungradenergiespeichers vorzugsweise durch Abpumpen des Gehäuses ein möglichst niedriger Druck erzeugt. Je geringer der Druck und/oder die Dichte des Gases im Gehäuse sind, desto geringer sind die Reibungsverluste des Rotors am Füllgas des Gehäuses. Daher wird das Gehäuse entweder mit einem leichten Gas wie Helium gefüllt oder auf Drücke kleiner 10⁻³ mbar evakuiert. Bei einem zylinderförmigen Rotor ist daher das Gehäuse zur Verringerung des zu evakuierenden Volumens vorzugsweise ebenfalls zylinderförmig mit einem Gehäusefuß, der im Wesentlichen das Gewicht des Rotors trägt, und einem Gehäusedeckel ausgestaltet. Gehäusefuß und Gehäusedeckel können dabei jede für den Betrieb geeignete Form besitzen.

In einer Ausführungsform des Schwungradenergiespeichers ist die Außenseite des Notfalllagerelements im Normalbetrieb parallel zur Rotationsachse des Rotors ausgerichtet. In einer alternativen Ausführungsform läuft das Notfalllagerelement in Richtung des Gehäusefußes konisch zu, um über die gesamte Länge des Notfalllagerelements den Verkippungswinkel besser stabil halten können. Hier wirken sich Materialveränderungen an der oberen Kante des Notfalllagerelements im Notfallbetrieb deutlich weniger auf den Verkippungswinkel aus als bei Notfalllagerelementen mit einer Außenseite parallel zur Rotationsachse des Rotors. In einer bevorzugten Ausführungsform ist die konische Form des Notfalllagerelements darauf angepasst, dass bei einem streifenden Ablaufen des Rotors an einer Innenseite des Gehäuses die Innenseite des Rotors zumindest an einer Seite des Notfalllagerelements die volle Länge der Außenseite des Notfalllagerelements berührt. Durch die vergrößerte Auflagefläche der Innenseite des Rotors auf dem Notfalllagerelement kann pro Zeiteinheit mehr Rotationsenergie abgeführt werden.

In einer Ausführungsform besteht die Außenseite des Notfalllagerelements zumindest an ihrer Oberfläche aus einem reibungsarmen Material, vorzugsweise ist das das reibungsarme Material Stahl, hochtemperaturfester Kunststoff oder reibungsarme Bronze. Diese Materialien haben einen Reibungskoeffizienten zwischen 0,02 und 0,2. Diese Materialien weisen eine für die maximal zu erwartenden freiwerdenden Energien eine ausreichende Robustheit und Abriebfestigkeit sowie einen für einen belastungsreduzierten kontrollierten Ablauf vorteilhafte geringen Reibungskoeffizienten für Gleitreibung auf.

In einer weiteren Ausführungsform ist das Notfalllagerelement dabei inklusive der Außenseite aus Stahl gefertigt. Stahl ist sehr robust und besitzt einen geringen Reibungskoeffizienten von 0,1 - 0,25. In einer bevorzugten Ausführungsform ist das Notfalllagerelement einteilig aus Stahl gefertigt, was eine weniger aufwändige Fertigung erlaubt und zudem durch die Einteiligkeit noch robuster ist.

In einer weiteren Ausführungsform ist zwischen dem Gehäusefuß und dem unteren Ende des zylinderförmigen Rotors ein auf den Durchmesser des Rotors geeignet angepasstes ringförmiges erstes Notfallvertikallager mit einer dem unteren Ende des Rotors zugewandten planaren reibungsarmen Auflageseite zur Gleitlagerung des Rotors angeordnet. Das erste Notfallvertikallager verringert die Reibung zwischen dem Rotor und dem Gehäusefuß und verlängert daher die Abbremszeit bis zum Stillstand des Rotors. Vorzugsweise ist das erste Notfallvertikallager als Ring ausgeführt, der eine Ringbreite besitzt, die groß genug ist, um alle möglichen Auflagepunkte des Rotors auf dem Gehäusefuß zu überdecken. Die möglichen Auflagepunkte des Rotors auf dem Gehäusefuß ergeben sich aus den geometrischen Verhältnissen von Zylinderdurchmesser, äußerer Durchmesser des Notfalllagerelements, Entfernung der unteren Kante des Notfalllagerelements zum Gehäusefuß und dem Werteberich der möglichen Verkippungswinkel des Rotors im Notfallbetrieb zueinander. Der Fachmann ist in der Lage, für eine vorliegende Ausführungsform eines Schwungradenergiespeichers aus den gegebenen Dimensionen der obigen Größe die benötigte Ringbreite und Ringposition des ersten Notfallvertikallagers zu bestimmen. Durch die Hinzufügung des ersten Notfallvertikallagers wird die Belastung des Gehäuses weiter verringert und eine Beschädigung des Gehäusefußes vermieden, da der Rotor den Gehäusefuß nicht berühren kann und somit langsamer abgebremst wird. Als Material für das erste Notfallvertikallager kann dasselbe Material wie für das Notfalllagerelement verwendet werden. Vorzugsweise sollte für das Notfallvertikallager ein Material verwendet werden, dass reibungsärmer ist als Stahl, beispielsweise Bronze oder glasfaserverstärktes PTFE mit Reibungskoeffizienten <0,1.

In einer weiteren Ausführungsform umfasst das Gehäuse oberhalb des oberen Endes des Rotors einen Gehäusedeckel, wobei zwischen dem Gehäusedeckel und dem oberen Ende des zylinderförmigen Rotors ein auf den Durchmesser des Rotors geeignet angepasstes ringförmiges zweites Notfallvertikallager mit einer dem oberen Ende des Rotors zugewandten planaren reibungsarmen Anschlagseite zur Gleitlagerung des Rotors angeordnet ist. Dadurch wird verhindert, dass der Rotor den Gehäusedeckel berühren kann und dadurch stark abgebremst würde, so dass durch das Vorhandensein des zweiten Notfallvertikallagers die Abbremszeit bis zum Stillstand des Rotors ebenfalls verlängert wird. Der Rotor kann sich trotz der in Richtung des Gehäusefußes wirkenden Gewichtskraft aufgrund der dynamischen Veränderung der Rotationsachse im Notfallbetrieb auch nach oben bewegen. Vorzugsweise ist das zweite Notfallvertikallager als Ring ausgeführt, der eine Ringbreite besitzt, die groß genug ist, um alle möglichen Anschlagpunkte des Rotors an dem Gehäusedeckel zu überdecken. Die möglichen Anschlagpunkte des Rotors auf den Gehäusedeckel ergeben sich aus den geometrischen Verhältnissen von Zylinderdurchmesser, äußerer Durchmesser des Notfalllagerelements, Entfernung der oberen Kante des Notfalllagerelements zum Gehäusedeckel und dem Werteberich der möglichen Verkippungswinkel des Rotors im Notfallbetrieb zueinander. Der Fachmann ist in der Lage, für eine vorliegende Ausführungsform eines Schwungradenergiespeichers aus den gegebenen Dimensionen der obigen Größe die benötigte Ringbreite und Ringposition des zweiten Notfallvertikallagers zu bestimmen. Durch die Hinzufügung des zweiten Notfallvertikallagers wird die Belastung des Gehäuses weiter verringert und eine Beschädigung des Gehäusedeckels vermieden, da der Rotor den Gehäusedeckel nicht berühren kann und somit langsamer abgebremst wird. Als Material für das zweite Notfallvertikallager kann dasselbe Material wie für das Notfalllagerelement verwendet werden. Vorzugsweise ist sowohl der Gehäusefuß als auch das Gehäuseelement aus Stahl gefertigt.

In einer weiteren Ausführungsform ist der Schwungradenergiespeicher als mobile Einheit ausgestaltet. Die Mobilität des erfindungsgemäßen Schwungradenergiespeichers wird gerade durch die leichte Bauweise des Gehäuses ermöglicht, die wiederum durch die Verwendung des erfindungsgemäßen Notfalllagerelements ermöglicht wird. Der Begriff "mobil" bezeichnet die Verlagerbarkeit des nicht betriebenen Schwungradenergiespeichers bei Bedarf an einen anderen Ort. Während des laufenden Betriebs wird der Schwungradenergiespeicher dagegen allerdings stationär betrieben.

In einer weiteren Ausführungsform ist das Notfalllagerelement ein einteiliger, sich von der oberen Kante zur unteren Kante erstreckender zylinderförmiger Ring, der an seiner Innenseite mit dem in den Rotor hineinragenden Gehäuseelement mit dem Gehäusefuß geeignet verbunden ist. Die einteilige Form ist durch die massive Bauweise besonder robust.

In einer alternativen Ausführungsform wird das Notfalllagerelement aus einer ersten Führungsscheibe zur Bereitstellung der unteren Kante und aus einer zweiten Führungsscheibe zur Bereitstellung der oberen Kante gebildet, wobei die Führungsschienen zueinander in einer Entfernung parallel zur Rotationsache angeordnet sind. Die Entfernung zwischen oberer und unterer Kante ergibt sich somit aus der Entfernung zwischen den ersten und zweiten Führungsschienen plus der Höhen der jeweiligen Führungsschienen parallel zur Rotationsachse des Rotors im Normalbertrieb. Durch die variabel einstellbare Entfernung zwischen den ersten und zweiten Führungsschienen kann bei festem Spaltmaß, das durch den gegebenen Durchmesser der Führungsschienen und den gegebenen inneren Durchmesser des Rotors definiert ist, der Verkippungswinkel variiert werden. Dadurch können dieselben Führungsschienen bei unterschiedlichen Rotorlängen und Gehäusedimensionen mit gleicher schützender Funktion der Limitierung des maximalen Verkippungswinkels auf einem akzeptablen Verkippungswinkel verwendet werden.

Die Erfindung betrifft des Weiteren ein Verfahren zum Betreiben eines Schwungradenergiespeichers gemäß der vorliegenden Erfindung mit einem zylinderförmigen Rotor und ein den Rotor ummantelndes Gehäuse mit einem mit der Gehäuseumgebung verbundenen Gehäusefuß, umfassend die Schritte
- Rotieren des Rotors in einer geeigneten Anzahl von Betriebslagern angeordnet im Bereich des oberen und unteren Endes des Rotors für einen Normalbetrieb; und
- Abbremsen des rotierenden Rotors in einem Notfallbetrieb zumindest mittels Gleitlagerung an einem am unteren Ende des Rotors angeordneten Notfalllagerelement, das innerhalb eines offenen unteren Bereichs des zylinderförmigen Rotors angeordnet und über einen aus Richtung des Gehäusefußes in den Rotor hineinragenden Gehäuseelement mit dem Gehäusefuß verbunden ist, und dessen äußere Form auf den inneren Zylinderdurchmesser des zylinderförmigen Rotors so angepasst ist, dass ein Spaltmaß zwischen einer Innenseite des zylinderförmigen Rotors und einer Außenseite des Notfalllagerelements existiert, dass darauf angepasst ist, dass sich die Außenseite des Notfalllagerelements und die Innenseite des Rotors im Normalbetrieb nicht berühren und dass im Notfallbetrieb eine Verkippung des Rotors gegenüber dem Gehäuse höchstens zu einem streifenden Ablaufen des Rotors an einer Innenseite des Gehäuses führt.

Das Rotieren des Rotors für einen Normalbetrieb bezeichnet das Beschleunigen des Rotors auf eine Solldrehzahl, das Abbremsen des Rotors auf eine gewünschte Solldrehzahl oder das Rotieren des Rotors auf einer konstanten Solldrehzahl bei intakten Betriebslagern und Naben. Vorzugsweise ist dabei das Notfalllagerelement rotationssymmetrisch.

In einer Ausführungsform umfasst das Verfahren den weiteren Schritt des verstärkten Abbremsens mittels eines zwischen dem Gehäusefuß und dem unteren Ende des zylinderförmigen Rotors angeordneten ringförmigen ersten Notfallvertikallager, das auf den Durchmesser des Rotors geeignet angepasst ist und eine dem unteren Ende des Rotors zugewandte planare reibungsarme Auflageseite zur Gleitlagerung des Rotors umfasst. Dadurch wird eine Beschädigung des Gehäusefußes während des Abbremsens vermieden, da der Rotor den Gehäusefuß nicht berühren kann. Außerdem wird die Abbremswirkung nicht zu sehr verstärkt, da der Rotor nicht an dem Gehäusefuß reibt und indem ein Material mit bekannten und geeigneten Eigenschaften für das erste Notfallvertikallager verwendet wird. Dieses Material kann dasselbe Material sein, das für das Notfalllagerelement verwendet wird.

In einer weiteren Ausführungsform umfasst das Verfahren den weiteren Schritt des Verhinderns einer Beschädigung eines oberhalb des oberen Endes des Rotors angeordneten Gehäusedeckels des Gehäuses mittels eines zwischen dem Gehäusedeckel und dem oberen Ende des zylinderförmigen Rotors angeordneten ringförmigen zweiten Notfallvertikallager, das auf den Durchmesser des Rotors geeignet angepasst ist und eine dem oberen Ende des Rotors zugewandte planare reibungsarme Anschlagseite zur Gleitlagerung des Rotors umfasst.

### Kurze Beschreibung der Abbildungen

Diese und andere Aspekte der Erfindung werden im Detail in den Abbildungen wie folgt gezeigt:
- Fig.1:: erfindungsgemäßer Schwungradenergiespeicher mit gelagertem Rotor im Normalbetrieb in perspektivischer Ansicht;
- Fig.2:: eine Ausführungsform eines erfindungsgemäßen Schwungradenergiespeichers im Normalbetrieb (a) im seitlichen Schnitt und (b) in Draufsicht von oben;
- Fig.3:: eine Ausführungsform eines erfindungsgemäßen Schwungradenergiespeichers im seitlichen Schnitt im Notfallbetrieb mit verkippten Rotor;
- Fig.4:: eine Ausführungsform eines erfindungsgemäßen Schwungradenergiespeichers gemäß Fig.3 mit konischem Notfalllagerelement.
- Fig.5:: eine weitere Ausführungsform des erfindungsgemäßen Notfalllagerelements;
- Fig.6:: eine Ausführungsform des erfindungsgemäßen Verfahrens.

### Detaillierte Beschreibung der Ausführungsbeispiele

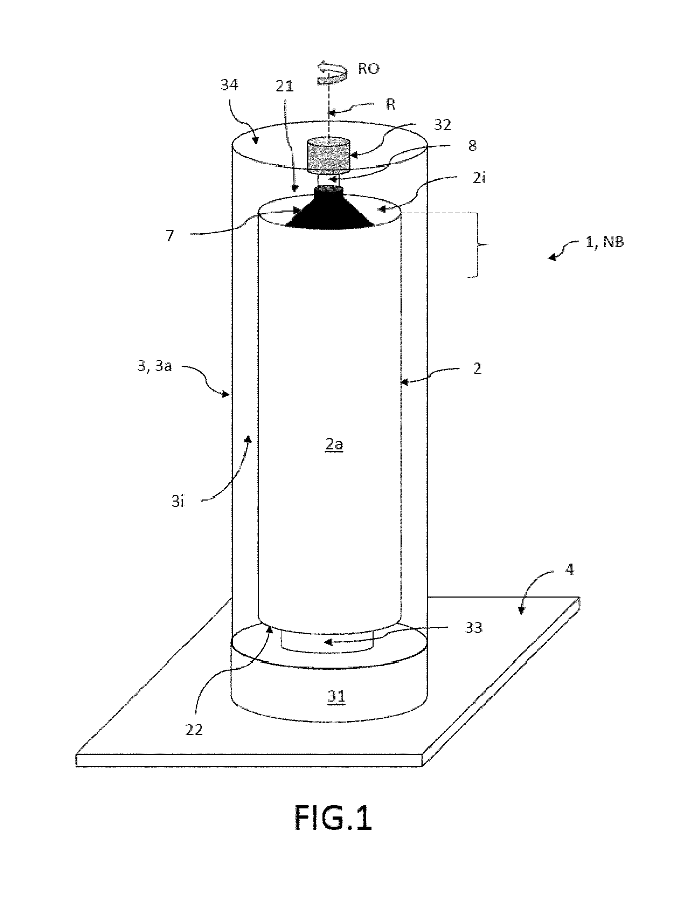

Fig. 1 zeigt einen Schwungradenergiespeicher 1 umfassend einen zylinderförmigen Rotor 2 zur Speicherung von Rotationsenergie und ein den Rotor 2 ummantelndes mit der Gehäuseumgebung 4 verbundenes Gehäuse 3 mit einem Gehäusefuß 31, wobei Betriebslager 32 im Bereich des oberen Endes 21 und des unteren Endes 22 (Lager hier nicht sichtbar) des Rotors 2 zur geeigneten Lagerung des Rotors 2 für einen Normalbetrieb NB um eine Rotationsachse R angeordnet sind. Der Rotor ist dabei über Naben 7 und Zapfen 8 in den Betriebslagern 32 gelagert. Die Betriebslager 32 sind hier nur schematisch dargestellt und können je nach Bauweise ein oder mehrere Radial- und Vertikallager umfassen. Die Innenseite des Gehäuses 3i ist der Außenseite 2a des Rotors 2 zugewandt, während an der Innenseite 2i des Rotors die Nabe 7 angeordnet ist. Die Außenseite 3a des Gehäuses ist der Gehäuseumgebung zugewandt. Das Betriebslager am unteren Ende 22 des Rotors 2 ist innerhalb des offenen unteren Bereichs des zylinderförmigen Rotors 2 an einem aus Richtung des Gehäusefußes 31 in den Rotor 2 hineinragenden Gehäuseelement 33, das mit dem Gehäusefuß 31 verbunden ist, angeordnet. Um den Rotor vollständig zu umschließen, besitzt das Gehäuse 3 oberhalb des oberen Endes 21 des Rotors einen Gehäusedeckel 34. Für diesen hier gezeigten Rotor ist dessen Rotationsachse R für die Rotation RO im Normalbetrieb NB vertikal zum Boden ausgerichtet.

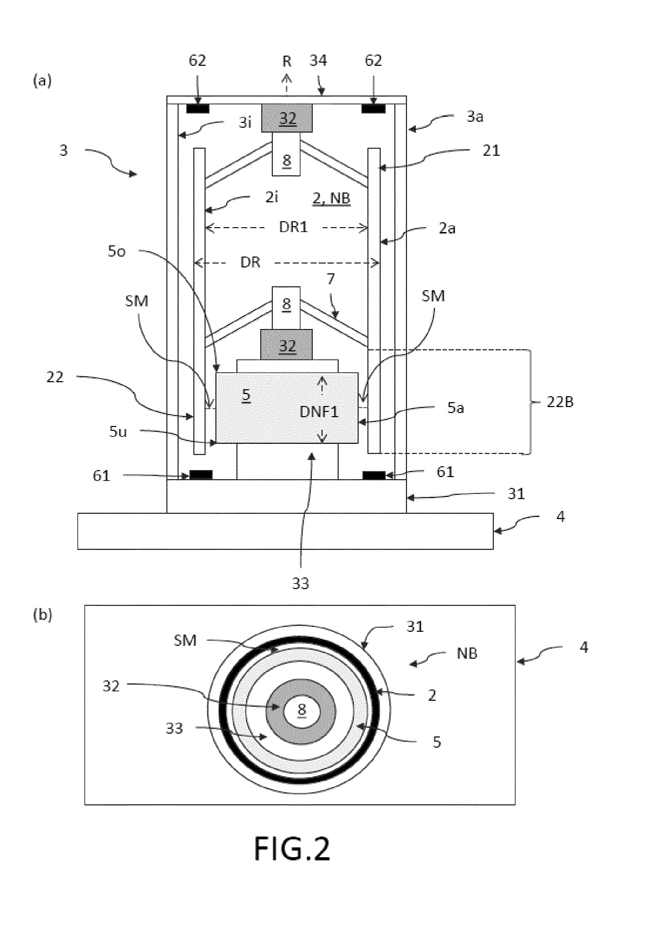

Fig. 2 zeigt eine Ausführungsform eines erfindungsgemäßen Schwungradenergiespeichers 1 im Normalbetrieb (a) im seitlichen Schnitt und (b) in Draufsicht von oben. Zusätzlich zu den bereits in Figur 1 gezeigten Komponenten ist hier das erfindungsgemäße rotationssymmetrische Notfalllagerelement 5 im Detail dargestellt, das innerhalb eines offenen unteren Bereichs 22B des zylinderförmigen Rotors 2 angeordnet und über das aus Richtung des Gehäusefußes 31 in den Rotor 2 hineinragenden Gehäuseelement 33 mit dem Gehäusefuß 31 verbunden ist. Dessen äußere Form ist auf den inneren Zylinderdurchmesser DR1 des zylinderförmigen Rotors 2 so angepasst, dass ein geeignetes Spaltmaß SM zwischen einer Innenseite 2i des zylinderförmigen Rotors 2 und einer Außenseite 5a des Notfalllagerelements 5 existiert, so dass sich die Außenseite 5a des Notfalllagerelements 5 und die Innenseite 2i des Rotors 2 im Normalbetrieb NB nicht berühren. Hierzu muss das Notfalllagerelement 5 einen Durchmesser kleiner dem inneren Durchmesser des Rotors besitzen. Da das Spaltmaß SM im Normalbetrieb NB umlaufend um das Notfalllagerelement 5 ist, ergibt sich das Spaltmaß SM aus der Hälfte der Differenz zwischen Innendurchmesser DR1 des Rotors 2 und dem Durchmesser des Notfalllagerelements 5. Der äußere Durchmesser DR des Rotors 2 ist dabei der Innendurchmesser DR1 plus das Zweifache der Wandstärke des Rotors 2. Das Spaltmaß SM ist des Weiteren darauf angepasst, dass im Notfallbetrieb NF eine Gleitlagerung des Rotors 2 auf dem Notfalllagerelement 5 ermöglicht wird, so dass eine Verkippung des Rotors 2 gegenüber dem Gehäuse 3 höchstens zu einem streifenden Ablaufen AL des Rotors 2 an einer Innenseite 3i des Gehäuses 3 führt. Dazu ist das Notfalllagerelement 5 in seiner Ausdehnung parallel zur Rotationsachse R des Rotors 2 durch eine untere Kante 5u und eine obere Kante 5u begrenzt mit einer die Entfernung DNF1 zwischen unterer und oberer Kante 5u, 5o. Hier ist die Außenseite 5a des Notfalllagerelements 5 im Normalbetrieb NB parallel zur Rotationsachse R des Rotors 2 ausgerichtet. Die Oberfläche der Außenseite 5a besteht hier aus einem reibungsarmen Material, vorzugsweise Stahl, hochtemperaturfester Kunststoff oder reibungsarme Bronze. In dieser Ausführungsform umfasst der Schwungradenergiespeicher zusätzlich ein zwischen dem Gehäusefuß 31 und dem unteren Ende 22 des zylinderförmigen Rotors 2 angeordnetes erstes Notfallvertikallager 61, dessen Form auf den Durchmesser DR des Rotors 2 zur Gleitlagerung des Rotors 2 im Notfallbetrieb geeignet angepasst ist. In dieser Ausführungsform umfasst der Schwungradenergiespeicher 1 des Weiteren ein zwischen dem Gehäusedeckel 34 und dem oberen Ende 21 des zylinderförmigen Rotors 2 angeordnetes zweites Notfallvertikallager 62, dessen Form auf den Durchmesser DR des Rotors 2 geeignet angepasst ist. In einer weiteren Ausführungsform ist das in den Rotor 2 hineinragende Gehäuseelement 33 zylinderförmig ausgestaltet und mit dem Gehäusefuß 31 für eine robuste Bauweise einteilig verbunden. Ein solcher Schwungradenergiespeicher 1 kann dadurch beispielsweise ohne statische Probleme als mobile Einheit verwendet werden. Fig.2(b) zeigt in Draufsicht von oben auf das Notfalllagerelement 5 und die Rotorwand (schwarz dargestellt) des Rotors. Das Notfalllagerelement ist als konzentrischer Ring zur Innenseite 2i des Rotors 2 ausgeführt, so dass das Spaltmaß SM im Normalbetrieb NB im Idealfall in allen Richtungen zum Rotor 2 hin gleich groß ist. Das Notfalllagerelement 5 ist hier am zylinderförmigen Gehäuseelement 33 befestigt. In anderen Ausführungsformen kann das Gehäuseelement 33 auch eine andere Form aufweisen. Zur Befestigung des Notfalllagerelements 5 am Gehäuseelement 33 muss lediglich die Form des Notfalllagerelements 5 auf der dem Gehäuseelement 33 zugewandten Seite auf die äußere Form des Gehäuseelements 33 angepasst sein. Unabhängig davon ist die äußere Form des Notfalllagerelements 5 kreisförmig auf die Form der Innenseite 2i des Rotors so angepasst, dass im Normalbetrieb NB eine Berührung des Notfalllagerelements 5 durch die rotierenden Innenseite 2i des Rotors 2 vermieden wird. Die kreisförmige Ausführung des Betriebslagers 32 ist nur beispielhaft zu verstehen. Das Betriebslager 32 kann jeden geeigneten Aufbau und Anordnung besitzen. In einer Ausführungsform ist das Notfalllagerelement 5 inklusive der Außenseite 5a aus Stahl gefertigt ist, vorzugsweise ist das Notfalllagerelement 5 einteilig aus Stahl gefertigt. In einer weiteren Ausführungsform kann der Gehäusefuß 31 und das Gehäuseelement 33 einteilig aus Stahl gefertigt sein. In einer weitern Ausführungsform können Notfalllagerelement 5, Gehäusefuß 31 und das Gehäuseelement 33 einteilig aus Stahl gefertigt sein.

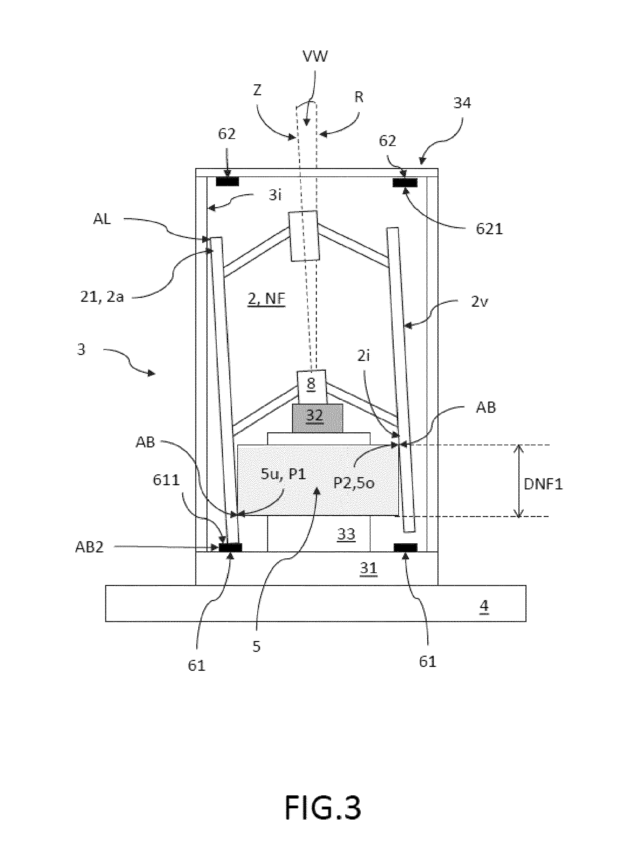

Fig.3 zeigt eine Ausführungsform eines erfindungsgemäßen Schwungradenergiespeichers 1 im seitlichen Schnitt im Notfallbetrieb NF mit einem verkippten Rotor 2. Der Notfallbetrieb NF kann durch Versagen eines oder mehrerer Betriebslager 32, der Naben 7 oder Zapfen 8 verursacht werden. In dem hier gezeigten Szenario hat beispielsweise das obere Betriebslager versagt und ist daher im Gegensatz zu Figur 2 nicht mehr dargestellt. Das Spaltmaß SM ist hier in Kombination mit der Ausgestaltung des Notfalllagerelements 5, insbesondere der Entfernung DNF1 zwischen der oberen und unteren Kanten 5o, 5u, so angepasst, dass diese Kanten 5u, 5o im Notfallbetrieb NF eine Gleitlagerung des verkippten Rotors 2v auf dem Notfalllagerelement 5 ermöglichen und dass die Kanten 5o und 5u die Verkippung des verkippten Rotors 2v gegenüber dem Gehäuse 3 auf einen Verkippungswinkel VW relativ zur Richtung der Rotationsachse R im Normalbetrieb derart begrenzen, so dass es höchstens zu einem streifenden Ablaufen AL des Rotors 2v an einer Innenseite 3i des Gehäuses 3 kommen kann. In anderen Ausführungsformen können die Entfernung DNF1 und/oder das Spaltmaß SM auch so gewählt werden, dass der maximale Verkippungswinkel VW so klein ist, dass der Rotor 2v auch im Notfallbetrieb NF mit seiner Außenseite 2a die Innenseite 3i des Gehäuses 3 im oberen Bereich 21 nicht berührt. Durch die Gleitlagerung des Rotors 2v auf den oberen und unteren Kanten 5o, 5u des Notfalllagerelements 5 wird der Rotor 2v bis zum Stillstand abgebremst AB. Zusätzlich reibt das untere Ende 22 des Rotors 2v auf dem in dieser Ausführungsform vorhandenen ersten Notfallvertikallager 61, das auf der dem unteren Ende 22 des Rotors 2 zugewandten Seite eine planaren reibungsarme Auflageseite 611 zur Gleitlagerung des Rotors 2v umfasst. Dadurch wird ein weiter vermindertes Abbremsen AB2 des Rotors im Vergleich zum Abbremsen bei fehlendem Notfallvertikallager 61 erreicht. Zusätzlich ist hier auch das ringförmige zweite Notfallvertikallager 62 mit einer dem oberen Ende 21 des Rotors 2v zugewandten planaren reibungsarmen Anschlagseite 621 zur Gleitlagerung des Rotors 2v ausgestattet. Da der um die ursprüngliche Rotationsachse R taumelnde Rotor 2v aufgrund dieser Bewegung auch eine Bewegung in Richtung des Gehäusedeckels 34 ausführen kann, verhindern das zweite Notfallvertikallager 62 ein verstärktes Abbremsen des Rotors v2 durch Berührung des Gehäusedeckels und erlaubt ein kontrolliertes langsames Abbremsen des Rotors 2v.

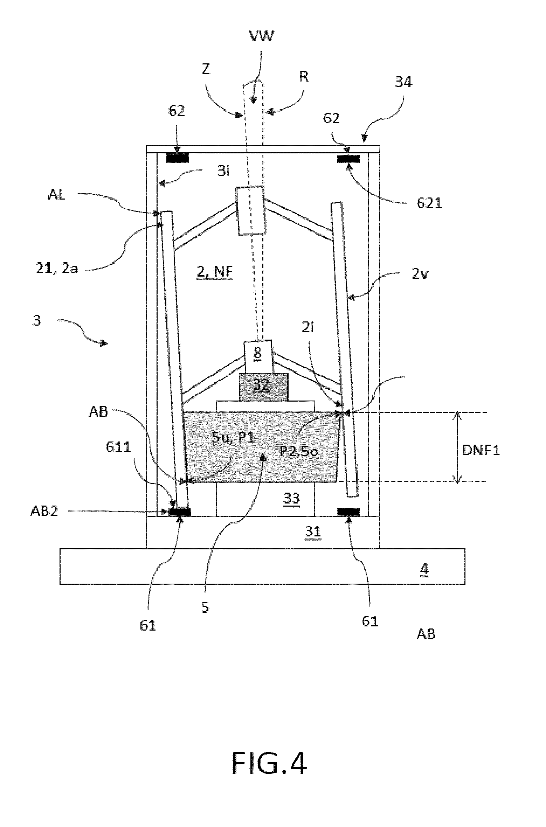

Fig.4 zeigt eine Ausführungsform eines erfindungsgemäßen Schwungradenergiespeichers 1 gemäß Fig.3 mit konischem Notfalllagerelement 5. Das Notfalllagerelement 5 läuft in Richtung des Gehäusefußes 31 konisch zu um über die gesamte Länge des Notfalllagerelements 5 den Verkippungswinkel VW besser stabil halten können. Hier wirken sich möglicherweise auftretende Materialveränderungen an der oberen Kante 5o des Notfalllagerelements 5 im Notfallbetrieb NF deutlich weniger auf den Verkippungswinkel VW aus als bei Notfalllagerelementen 5 mit einer Außenseite 5a parallel zur Rotationsachse R des Rotors 2. In der hier gezeigten bevorzugten Ausführungsform ist die konische Form des Notfalllagerelements 5 darauf angepasst, dass bei einem streifenden Ablaufen AL des Rotors 2 an einer Innenseite 3i des Gehäuses 3 die Innenseite 2i des Rotors 2 zumindest an einer Seite (linke Seite in der Fig.4) des Notfalllagerelements 5 die volle Länge der Außenseite 5a des Notfalllagerelements 5 berührt. Durch die so vergrößerte Auflagefläche der Innenseite 2i des Rotors 2 auf dem Notfalllagerelement 5 kann pro Zeiteinheit mehr Rotationsenergie abgeführt werden als bei Notfalllagerelementen 5 mit Au0enseiten 5a parallel zur Rotationsachse R des Rotors 2 im Normalbetrieb NB..

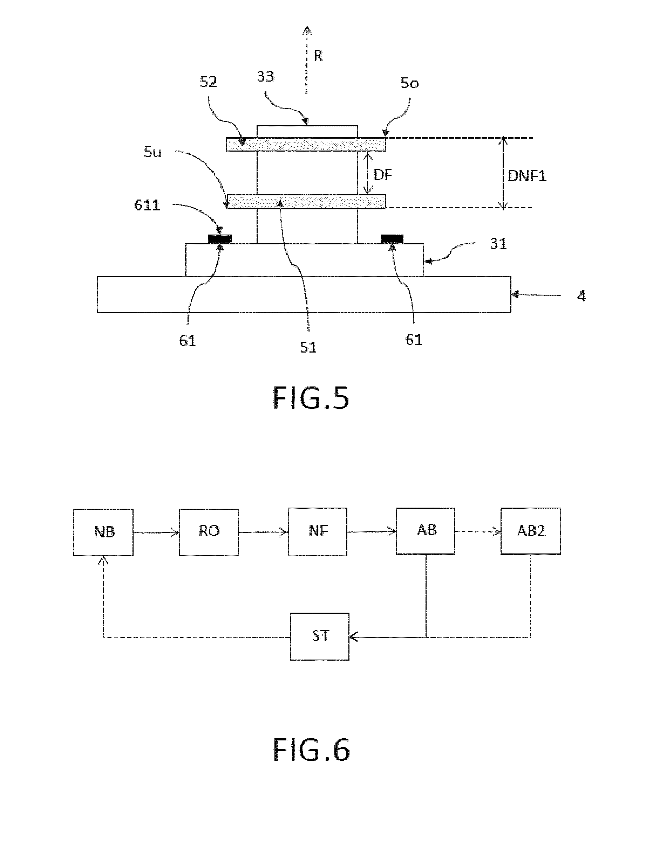

Fig.5 zeigt eine weitere Ausführungsform des erfindungsgemäßen Notfalllagerelements, wobei hier das Notfalllagerelement 5 aus einer ersten Führungsscheibe 51 zur Bereitstellung der unteren Kante 5u und aus einer zweiten Führungsscheibe 52 zur Bereitstellung der oberen Kante 5o gebildet wird, wobei die Führungsschienen 51, 52 zueinander in einer Entfernung DF parallel zur Rotationsache R angeordnet sind. Dadurch, dass das Notfalllagerelement 5 hier nicht einteilig ausgebildet ist, kann die Entfernung DF zwischen den ersten und zweiten Führungsschienen 51, 52 variabel eingestellt werden. Somit kann bei einem festen Spaltmaß SM, das durch den gegebenen Durchmesser der Führungsschienen 51, 52 und den gegebenen inneren Durchmesser DR1 des Rotors 2 definiert ist, der maximal mögliche Verkippungswinkel VW über die Entfernung DF geeignet angepasst werden. Dadurch können dieselben Führungsschienen 51, 52 bei unterschiedlichen Rotorlängen und Gehäusedimensionen mit gleicher schützender Funktion der Limitierung des maximalen Verkippungswinkels VW auf einem akzeptablen Verkippungswinkel VW verwendet werden. Die Entfernung DNF1 zwischen oberer und unterer Kante 5o, 5u ist dabei die Summe aus den Höhen der jeweiligen Führungsschienen 51, 52 und der Entfernung DF zwischen den Führungsschienen 51, 52. Die Führungsschienen können hier dieselbe Form wie das Notfalllagerelements 5 in Draufsicht von oben wie in Figur 2(b) dargestellt besitzen. Bezüglich Form und Spaltmaß gelten dieselben Ausführungen.

Für eine Einstellung des Reibungskoeffizienten zur Bereitstellung einer Gleitreibung der Innenseite 2i des Rotors 2 auf dem Notfalllagerelement 5, insbesondere auf den oberen und unteren Kanten 5o, 5u, kann die Oberfläche des Notfalllagerelements 5 beziehungsweise die Oberflächen der Führungsschienen 51, 52 mit einer geeigneten Beschichtung versehen sein, die den Reibungskoeffizienten auf den gewünschten Wert einstellt.

Fig.6 zeigt eine Ausführungsform des erfindungsgemäßen Verfahrens zum Betreiben eines Schwungradenergiespeichers gemäß der vorliegenden Erfindung. Im Normalbetrieb NB wird der Rotor 2 mit einer gewünschten Drehzahl rotiert RO. Hierbei kann der Rotor 2 auf diese gewünschte Drehzahl beschleunigt (Aufnahme/Speicherung von Energie) oder auf diese gewünschte Drehzahl abgebremst (Abgabe/Entladen von Energie) oder auf einer gewünschten Drehzahl gehalten werden. Sollte ein Notfall NF durch Störung / Versagen eines oder mehrerer Betriebslagers und/oder einer oder mehrerer Naben und/oder eines oder mehrerer Zapfen auftreten, wird der rotierende Rotor 2 mittels Gleitlagerung am Notfalllagerelement 5 abgebremst AB. Das Abbremsen kann durch die ringförmigen ersten und/oder zweite Notfallvertikallager 61, 62 noch zusätzlich kontrolliert werden, indem der Rotor 2 dem Rotor (2) zugewandten planaren reibungsarmen Auflageseiten 611 beziehungsweise Anschlagseiten 612 gleitend bis zu einem Stillstand ST abgebremst AB2 wird. Nach einem Stillstand ST und einer eventuell erfolgten Reparatur kann der Rotor, sofern die Reparatur möglich war, wieder in einem Normalbetrieb NB weiter betrieben werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Schwungradenergiespeicher
- 2: Rotor als Teil des Schwungradenergiespeichers
- 2v: verkippter Rotor (Notfallbetrieb)
- 2a: Außenseite des Rotors
- 2i: Innenseite des Rotors
- 21: oberes Ende des Rotors
- 22: unteres Ende des Rotors
- 22B: offener unterer Bereich des Rotors
- 3: Gehäuse als Teil des Schwungradenergiespeichers
- 3a: Außenseite des Gehäuses
- 3i: Innenseite des Gehäuses
- 31: Gehäusefuß
- 32: Betriebslager
- 33: Gehäuseelement
- 34: Gehäusedeckel
- 4: Gehäuseumgebung
- 5: erstes Notfalllagerelement
- 5a: Außenseite des Notfalllagerelements, ist der Innenseite des Rotors zugewandt
- 5i: Innenseite des Notfalllagerelements, ist dem Gehäuseelement zugewandt
- 5u: untere Kante des Notfalllagerelements
- 5o: obere Kante des Notfalllagerelements
- 51: erste Führungsscheibe
- 52: zweite Führungsscheibe
- 61: erstes Notfallvertikallager
- 611: Auflageseite des ersten Notfallvertikallagers zugewandt zum Rotor
- 62: zweites Notfallvertikallager
- 621: Anschlagseite des zweiten Notfallvertikallagers zugewandt zum Rotor
- 7: Nabe
- 8: Zapfen
- AB: Abbremsen des Rotors im Notfallbetrieb
- AB2: verstärktes Abbremsen des Rotors im Notfallbetrieb
- AL: Ablaufen des Rotors an der Gehäuseinnenwand
- DF: Entfernung zwischen erster und zweiter Führungsschiene
- DNF1: Entfernung zwischen der oberen und der unteren Kante
- DR: Durchmesser des Rotors
- DR1: innerer Durchmesser des Rotors
- NB: Normalbetrieb des Rotors
- NF: Notfallbetrieb des Rotors
- P1: erste Position
- P2: zweite Position
- R: Rotationsachse des Rotors
- RO: Rotieren des Rotors im Normalbetrieb
- SM: Spaltmaß
- ST: Stillstand des Rotors
- VW: Verkippungswinkel
- Z: Zylinderachse des Rotors (=Rotationsachse im Normalbetrieb)

## Patentansprüche

1. Ein Schwungradenergiespeicher (1) umfassend einen zylinderförmigen Rotor (2) zur Speicherung von Rotationsenergie und ein den Rotor (2) ummantelndes mit der Gehäuseumgebung (4) verbundenes Gehäuse (3) mit einem Gehäusefuß (31), wobei Betriebslager (32) im Bereich des oberen und unteren Endes (21, 22) des Rotors (2) zur geeigneten Lagerung des Rotors (2) für einen Normalbetrieb (NB) um eine Rotationsachse (R) angeordnet sind und im Bereich des unteren Endes (22) des Rotors (2) ein Notfalllagerelement (5) innerhalb eines offenen unteren Bereichs (22B) des zylinderförmigen Rotors (2) angeordnet ist, das über einen aus Richtung des Gehäusefußes (31) in den Rotor hineinragenden Gehäuseelement (33) mit dem Gehäusefuß (31) verbunden ist, und dessen äußere Form auf den inneren Zylinderdurchmesser (DR1) des zylinderförmigen Rotors (2) so angepasst ist, dass ein Spaltmaß (SM) zwischen einer Innenseite (2i) des zylinderförmigen Rotors (2) und einer Außenseite (5a) des Notfalllagerelements (5) existiert, dass darauf angepasst ist, dass sich die Außenseite (5a) des Notfalllagerelements (5) und die Innenseite (2i) des Rotors (2) im Normalbetrieb (NB) nicht berühren und im Notfallbetrieb (NF) eine Gleitlagerung des Rotors (2) auf dem Notfalllagerelement (5) ermöglicht wird und dass eine Verkippung des Rotors (2) gegenüber dem Gehäuse (3) höchstens zu einem streifenden Ablaufen des Rotors (2) an einer Innenseite (3i) des Gehäuses (3) führt.

2. Der Schwungradenergiespeicher (1) nach Anspruch 1,
**dadurch gekennzeichnet,**
**dass** das Notfalllagerelement (5) in seiner Ausdehnung parallel zur Rotationsachse (R) des Rotors (2) durch eine untere und eine obere Kante (5u, 5o) begrenzt ist, wobei die Entfernung (DNF1) zwischen unterer und oberer Kante (5u, 5o) bei einem bestimmten Spaltmaß (SM) so groß gewählt ist, dass der Rotor (2), der mit der Innenseite (2i) an einer ersten Position (P1) der unteren Kante (5u) und an einer gegenüberliegenden zweiten Position (P2), der entsprechend gegenüberliegenden oberen Kante (5o) des Notfalllagerelements (5) berührt, einen maximalen Verkippungswinkel (VW) gegenüber der für den Normalbertrieb (NB) vorgesehenen Rotationsachse (R) besitzt, der zumindest klein genug ist, damit der Rotor (2) in einem oberen Bereich seiner Außenseite (2a) lediglich streifend an einer Inneneits (3i) des Gehäuses (3) ablaufen kann.

3. Der Schwungradenergiespeicher (1) nach Anspruch 2,
**dadurch gekennzeichnet,**
**dass** die Entfernung (DNF1) und/oder das Spaltmaß (SM) so gewählt sind, dass der maximale Verkippungswinkel (VW) so klein ist, dass der Rotor (2) auch im Notfallbetrieb (NF) mit seiner Außenseite (2a) die Innenseite (3i) des Gehäuses (3) im oberen Bereich nicht berührt.

4. Der Schwungradenergiespeicher (1) nach einem der voranstehenden Ansprüche, **dadurch gekennzeichnet,**
**dass** das Notfalllagerelement (5) in Richtung des Gehäusefußes (31) konisch zuläuft, vorzugsweise ist die konische Form des Notfalllagerelements (5) darauf angepasst, dass bei einem streifenden Ablaufen des Rotors (2) an einer Innenseite (3i) des Gehäuses (3) die Innenseite (2i) des Rotors (2) zumindest an einer Seite des Notfalllagerelements (5) die volle Länge der Außenseite (5a) des Notfalllagerelements (5) berührt.

5. Der Schwungradenergiespeicher (1) nach einem der voranstehenden Anspruche, **dadurch gekennzeichnet,**
**dass** die Außenseite (5a) zumindest an ihrer Oberfläche aus einem reibungsarmen Material besteht, vorzugsweise ist das reibungsarme Material Stahl, hochtemperaturfester Kunststoff oder reibungsarme Bronze ist.

6. Der Schwungradenergiespeicher (1) nach Anspruch 5,
**dadurch gekennzeichnet,**
**dass** das Notfalllagerelement (5) inklusive der Außenseite (5a) aus Stahl gefertigt ist, vorzugsweise ist das Notfalllagerelement (5) einteilig aus Stahl gefertigt.

7. Der Schwungradenergiespeicher (1) nach einem der voranstehenden Ansprüche, **dadurch gekennzeichnet,**
**dass** zwischen dem Gehäusefuß (31) und dem unteren Ende (22) des zylinderförmigen Rotors (2) ein auf den Durchmesser (DR) des Rotors (2) geeignet angepasstes ringförmiges erstes Notfallvertikallager (61) mit einer dem unteren Ende (22) des Rotors (2) zugewandten planaren reibungsarmen Auflageseite (611) zur Gleitlagerung des Rotors (2) angeordnet ist.

8. Der Schwungradenergiespeicher (1) nach einem der voranstehenden Ansprüche, **dadurch gekennzeichnet,**
**dass** das Gehäuse (3) oberhalb des oberen Endes (21) des Rotors (2) einen Gehäusedeckel (34) umfasst, und dass zwischen dem Gehäusedeckel (34) und dem oberen Ende (21) des zylinderförmigen Rotors (2) ein auf den Durchmesser (DR) des Rotors (2) geeignet angepasstes ringförmiges zweites Notfallvertikallager (62) mit einer dem oberen Ende (21) des Rotors (2) zugewandten planaren reibungsarmen Anschlagseite (621) zur Gleitlagerung des Rotors (2) angeordnet ist.

9. Der Schwungradenergiespeicher (1) nach einem der voranstehenden Ansprüche, **dadurch gekennzeichnet,**
**dass** das in den Rotor (2) hineinragende Gehäuseelement (33) zylinderförmig ausgestaltet ist und vorzugsweise mit dem Gehäusefuß (31) einteilig verbunden ist.

10. Der Schwungradenergiespeicher (1) nach einem der voranstehenden Ansprüche, **dadurch gekennzeichnet,**
**dass** der Schwungradenergiespeicher (1) als mobile Einheit ausgestaltet ist.

11. Der Schwungradenergiespeicher (1) nach einem der Ansprüche 2 bis 10, **dadurch gekennzeichnet,**
**dass** das Notfalllagerelement (5) ein einteiliger, sich von der oberen Kante (5o) zur unteren Kante (5u) erstreckender zylinderförmiger Ring ist, der an seiner Innenseite (5i) mit dem in den Rotor (2) hineinragenden Gehäuseelement (33) mit dem Gehäusefuß (31) geeignet verbunden ist.

12. Der Schwungradenergiespeicher (1) nach einem der Ansprüche 2 bis 10, **dadurch gekennzeichnet,**
**dass** das Notfalllagerelement (5) aus einer ersten Führungsscheibe (51) zur Bereitstellung der unteren Kante (5u) und aus einer zweiten Führungsscheibe (52) zur Bereitstellung der oberen Kante (5o) gebildet wird, wobei die Führungsschienen (51, 52) zueinander in einer Entfernung (DF) parallel zur Rotationsache (R) angeordnet sind.

13. Verfahren zum Betreiben eines Schwungradenergiespeichers (1) nach Anspruch 1 mit einem zylinderförmigen Rotor (2) und ein den Rotor (2) ummantelndes Gehäuse (3) mit einem mit der Gehäuseumgebung (4) verbundenen Gehäusefuß (31), umfassend die Schritte
- Rotieren (RO) des Rotors (2) in einer geeigneten Anzahl von Betriebslagern (32), angeordnet im Bereich des oberen und unteren Endes (21, 22) des Rotors (2) für einen Normalbetrieb (NB); und
- Abbremsen (AB) des rotierenden Rotors (2) in einem Notfallbetrieb (NF), zumindest mittels Gleitlagerung an einem am unteren Ende des Rotors (2) angeordneten Notfalllagerelement (5), das innerhalb eines offenen unteren Bereichs (22B) des zylinderförmigen Rotors (2) angeordnet und über einen aus Richtung des Gehäusefußes (31) in den Rotor (2) hineinragenden Gehäuseelement (33) mit dem Gehäusefuß (31) verbunden ist, und dessen äußere Form auf den inneren Zylinderdurchmesser (DR1) des zylinderförmigen Rotors (2) so angepasst ist, dass ein Spaltmaß (SM) zwischen einer Innenseite (2i) des zylinderförmigen Rotors (2) und einer Außenseite (5a) des Notfalllagerelements (5) existiert, dass darauf angepasst ist, dass sich die Außenseite (5a) des Notfalllagerelements (5) und die Innenseite (2i) des Rotors (2) im Normalbetrieb (NB) nicht berühren und dass im Notfallbetrieb (NF) eine Verkippung des Rotors (2) gegenüber dem Gehäuse (3) höchstens zu einem streifenden Ablaufen des Rotors (2) an einer Innenseite (3i) des Gehäuses (3) führt.

14. Das Verfahren nach Anspruch 13, umfassend den weiteren Schritt des verstärkten Abbremsens (AB2) mittels eines zwischen dem Gehäusefuß (31) und dem unteren Ende (22) des zylinderförmigen Rotors (2) angeordneten ringförmigen ersten Notfallvertikallager (61), das auf den Durchmesser (DR) des Rotors (2) geeignet angepasst ist und eine dem unteren Ende (22) des Rotors (2) zugewandte planare reibungsarme Auflageseite (611) zur Gleitlagerung des Rotors (2) umfasst.

15. Das Verfahren nach Anspruch 14, umfassend den weiteren Schritt des Verhinderns einer Beschädigung eines oberhalb des oberen Endes (21) des Rotors (2) angeordneten Gehäusedeckels (34) des Gehäuses (3) mittels eines zwischen dem Gehäusedeckel (34) und dem oberen Ende (21) des zylinderförmigen Rotors (2) angeordneten ringförmigen zweiten Notfallvertikallager (62), das auf den Durchmesser (DR) des Rotors geeignet angepasst ist und eine dem oberen Ende (21) des Rotors (2) zugewandte planare reibungsarme Anschlagseite (621) zur Gleitlagerung des Rotors (2) umfasst.
